# EUROPEAN PATENT APPLICATION

(11) **EP 4 481 875 A1**
(43) Date of publication of application: **25.12.2024**
(21) Application number: 22952468.1
(22) Date of filing: 29.07.2022
(51) Int. Cl.: H01M 10/0567

(54) **ELECTROLYTE SOLUTION, SECONDARY BATTERY, BATTERY MODULE, BATTERY PACK, AND ELECTRICAL APPARATUS**

(71) Applicant: Contemporary Amperex Technology Co., Limited, Fujian 352100 (CN)
(72) Inventor: WANG, Hansen, Ningde City, Fujian 352100 (CN); LIU, Chengyong, Ningde City, Fujian 352100 (CN); XIE, Zhangdi, Ningde City, Fujian 352100 (CN); HUANG, Shengyuan, Ningde City, Fujian 352100 (CN); HU, Bobing, Ningde City, Fujian 352100 (CN)
(74) Representative: Gong, Jinping
(86) International application number: PCT/CN2022/108958
(87) International publication number: WO 2024/021020

(57) **Abstract**

Provided is an electrolyte, including a first solvent represented by formula I and a second solvent selected from one or more of formula II and formula III, where R₁ is selected from C1-C6 fluoroalkyl; R₂ is selected from a hydrogen atom, C1-C6 alkyl or C1-C6 fluoroalkyl; n represents 1 or 2; and R₃ to R₁₀ are each independently selected from a hydrogen atom, a fluorine atom, C1-C6 alkyl, or C1-C6 fluoroalkyl. The electrolyte of the present disclosure can improve cycle stability and safety of the battery. The present disclosure also relates to a secondary battery including the electrolyte, a battery module, a battery pack, and an electrical device.

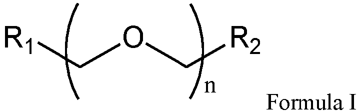

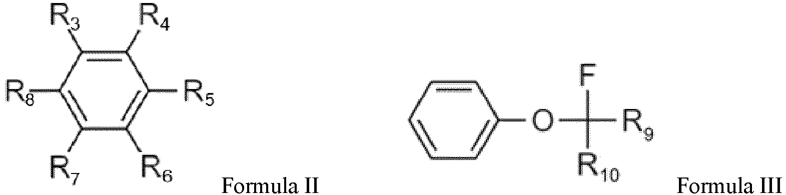

## Description

### FIELD

The present disclosure relates to the technical field of lithium batteries, and more particularly, to an electrolyte, a secondary battery, a battery module, a battery pack, and an electrical device.

### BACKGROUND

Secondary batteries have been widely used in consumer electronics, electric vehicles, and energy storage. For common lithium-ion secondary batteries, improvements in terms of energy density have approached the theoretical limit. In order to meet future application scenarios involving higher energy density requirements such as high-endurance electric vehicles, electric aircraft, etc., it is necessary to develop a secondary battery with more energy density potential, for example, a lithium secondary battery with a lithium negative electrode matched with a ternary high-voltage positive electrode. However, the lithium negative electrode has high reactivity and is prone to react with the electrolyte spontaneously to form a solid electrolyte interface (SEI) with poor mechanical strength and chemical stability, which may induce dendritic growth morphology. Therefore, the secondary batteries may have poor cycle capability and safety risk, and the service time may be exhausted due to rapid lithium source consumption.

The design and optimization of electrolyte is very important to improve the cycle capability of lithium batteries. However, the electrolytes known in the related art have the problem of a systemic "transient" overcharge in secondary batteries with lithium negative electrode, which may result in irrepressible battery management difficulties and safety risks.

### SUMMARY

The present disclosure is made in view of the above-mentioned problems, and an object thereof is to provide an electrolyte capable of avoiding an overcharge phenomenon, thereby improving the cycle stability and safety of a lithium-ion secondary battery, and at the same time, extending the cycle life.

In order to achieve the above-mentioned object, the present disclosure provides an electrolyte, a secondary battery including the electrolyte, a battery module, a battery pack, and an electrical device.

A first aspect of the present disclosure provides an electrolyte, including:
a first solvent as represented by Formula I: 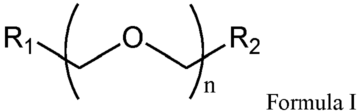 wherein:
   R₁ is selected from C1-C6 fluoroalkyl;
   R₂ is selected from a hydrogen atom, C1-C6 alkyl, and C1-C6 fluoroalkyl; and
   n represents 1 or 2, and
a second solvent selected from one or more of compounds represented by Formula II and Formula III: 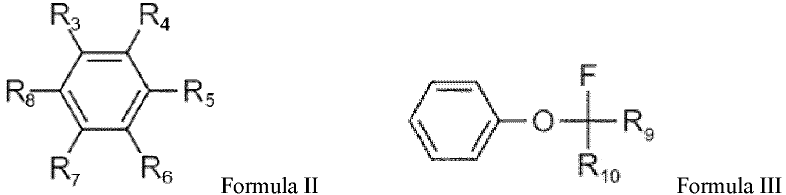 wherein R₃ to R₁₀ are each independently selected from a hydrogen atom, a fluorine atom, C1-C6 alkyl, and C1-C6 fluoroalkyl.

The electrolyte of the present disclosure can avoid the "transient" overcharge problem of the secondary battery in a long cycle, and improve cycle stability and safety. In addition, the electrolyte of the present disclosure has high oxidation stability and can prolong the cycle life of a secondary battery with a metal or alloy negative electrode.

In any embodiment, in the Formula I, R₁ is selected from C1-C3 fluoroalkyl, and optionally, fluoromethyl; and/or R₂ is selected from a hydrogen atom, C1-C3 alkyl, and C1-C3 fluoroalkyl, and optionally, selected from a hydrogen atom, methyl, fluoromethyl, ethyl, and fluoroethyl.

In any embodiment, in the Formula II, R₃ to R₈ are each independently selected from a hydrogen atom, a fluorine atom, and C1-C6 fluoroalkyl, and optionally, selected from a hydrogen atom, a fluorine atom, and C1-C3 fluoroalkyl; and/or in the formula III, R₉ to R₁₀ are each independently selected from the group consisting of a hydrogen atom, a fluorine atom, C1-C6 alkyl, and C1-C6 fluoroalkyl, optionally, from the group consisting of a hydrogen atom, a fluorine atom, C1-C3 alkyl, and C1-C3 fluoroalkyl; and more optionally, R₉ to Rio are each independently selected from a hydrogen atom and a fluorine atom.

By further selecting the first and second solvents, the electrolyte can have higher oxidation stability, avoiding overcharging, and improving cycle life.

In any embodiment, a mass ratio of the first solvent to the second solvent ranges from 0.5 to 3, optionally, from 0.7 to 1.5, and more optionally, from 0.9 to 1.1. When the mass ratio of the two solvents is within the above-mentioned range, the overcharge can be avoided, an electrolyte salt can be sufficiently dissolved in the electrolyte, and the electrolyte can have good oxidation resistance and long cycle life.

In any embodiment, the electrolyte further includes an antioxidant. Optionally, the antioxidant is selected from at least one of lithium nitrate and lithium perchlorate. The addition of antioxidant is conducive to the further improvement of cycle life.

In any embodiment, a concentration of the antioxidant ranges from 0.5 wt% to 3 wt%, optionally, from 0.7 wt% to 1.5 wt%, and more optionally, from 0.9 wt% to 1.1 wt%, based on a total weight of the electrolyte. The addition of the antioxidant can further increase a threshold voltage value of the oxidation stability, while further prolonging the cycle life. At the same time, if the concentration of the antioxidant is within the above-mentioned range, the above-mentioned effects can be sufficiently exerted, while preventing the normal transport of lithium ions from being affected by the excessive antioxidant that may cause a shortening of cycle life.

In any embodiment, the electrolyte further includes a fluorine-containing electrolyte salt. Optionally, the fluorine-containing electrolyte salt is selected from at least one of lithium bis(fluorosulfonyl)imide, lithium hexafluorophosphate, lithium tetrafluoroborate, lithium hexafluoroarsenate, lithium bis(trifluoromethanesulfonylimide), lithium trifluoromethanesulfonate, lithium difluorophosphate, lithium difluoro(oxalato)borate, lithium difluorobis(oxalato)phosphate, and lithium tetrafluoro(oxalato)phosphate. More optionally, the fluorine-containing electrolyte salt is lithium bis(fluorosulfonyl)imide. By using the above-mentioned electrolyte salt, the negative electrode interfacial stability can be advantageously enhanced, and cycle performance can be improved.

In any embodiment, a concentration of the fluorine-containing electrolyte salt ranges from 0.5M to 3M, and optionally, 1M. This concentration of electrolyte salt is conducive to the further improvement of cycle performance.

A second aspect of the present disclosure provides a secondary battery including the electrolyte according to the first aspect of the present disclosure.

A third aspect of the present disclosure provides a battery module including the secondary battery according to the second aspect of the present disclosure.

A fourth aspect of the present disclosure provides a battery pack including the battery module according to the third aspect of the present disclosure.

A fifth aspect of the present disclosure provides an electrical device including at least one selected from the secondary battery according to the second aspect, the battery module according to the third aspect, or the battery pack according to the fourth aspect of the present disclosure.

The electrolyte of the present disclosure can improve the cycle stability of the lithium-ion secondary battery, prolong the cycle life, avoid the overcharge phenomenon, and improve the safety performance of the battery.

### BRIEF DESCRIPTION OF THE DRAWINGS

Fig. 1 is a cycle life graph of a secondary battery containing an electrolyte in the related art.
Fig. 2 illustrates test results of oxidation stability of an electrolyte in the related art.
Fig. 3 illustrates test results of oxidation stability of a conventional ether electrolyte and a fluorine-containing electrolyte.
Fig. 4 is a cycle life graph of a secondary battery containing an electrolyte according to an embodiment of the present disclosure.
Fig. 5 is a cycle voltage-capacity curve of a secondary battery of Comparative Example 1.
Fig. 6 is a cycle life graph of a secondary battery containing an electrolyte of Comparative Example 2.
Fig. 7 is a cycle life graph of a secondary battery containing an electrolyte of Comparative Example 3.
Fig. 8 is a cycle life graph of a secondary battery containing an electrolyte of Comparative Example 4.
Fig. 9 is a cycle life graph of a secondary battery containing an electrolyte of Comparative Example 5.
Fig. 10 is a cycle life graph of a secondary battery containing an electrolyte of Comparative Example 6.
Fig. 11 is a schematic diagram of a secondary battery according to an embodiment of the present disclosure.
Fig. 12 is an exploded view of a secondary battery according to an embodiment of the present disclosure as illustrated in Fig. 11.
Fig. 13 is a schematic diagram of a battery module according to an embodiment of the present disclosure.
Fig. 14 is a schematic diagram of a battery pack according to an embodiment of the present disclosure.
Fig. 15 is an exploded view of a battery pack according to an embodiment of the present disclosure as illustrated in Fig. 14.
Fig. 16 is a schematic diagram of an electrical device, in which a secondary battery according to an embodiment of the present disclosure is used as a power source.

### Description of reference numerals:

1 battery pack; 2 upper box; 3 lower box; 4 battery module; 5 secondary battery; 51 housing; 52 electrode assembly; 53 top cover assembly.

### DETAILED DESCRIPTION

Hereinafter, embodiments of an electrolyte, a secondary battery, a battery module, a battery pack, and an electrical device of the present disclosure are specifically disclosed with reference to the accompanying drawings as appropriate. However, there may be cases where unnecessary detailed description is omitted. For example, detailed descriptions of well-known matters and repeated descriptions of practically identical structures are omitted. This is to avoid unnecessarily obscuring the following description to facilitate the understanding by those skilled in the art. In addition, the drawings and the following description are provided to enable those skilled in the art to fully understand the present disclosure and are not intended to limit the subject matter recited in the claims.

The "ranges" disclosed herein are defined by lower and upper limits. A given range is defined by selecting a lower limit and an upper limit, and the selected lower and upper limits define the boundaries of the particular range. Ranges defined in such a manner may or may not include the end values, and the end values can be arbitrarily combined, i.e., any lower limit can be combined with any upper limit to form a range. For example, if ranges of 60 to 120 and 80 to 110 are listed for a particular parameter, it can be understood that ranges of 60 to 110 and 80 to 120 can also be anticipated. In addition, if the listed minimum range values are 1 and 2 and the listed maximum range values are 3, 4, the following ranges shall be all anticipated, i.e., 1 to 3, 1 to 4, 1 to 5, 2 to 3, 2 to 4, and 2 to 5. In the present disclosure, unless otherwise indicated, the numerical range "a to b" represents an abbreviated representation of any real number combination between a and b, where a and b are both real numbers. For example, a numerical range of "0 to 5" indicates that all real numbers between "0 to 5" have been fully set forth herein, and "0 to 5" is merely a shorthand representation of combinations of these numbers. In addition, when it is stated that a certain parameter is an integer ≥ 2, it is equivalent to disclosing that the parameter is, for example, an integer of 2, 3, 4, 5, 6, 7, 8, 9, 10, 11, 12, etc.

All embodiments and alternative embodiments of the present disclosure may be combined with each other to form a new technical solution, unless otherwise specified.

All technical features and alternative technical features of the present disclosure may be combined with each other to form a new technical solution, unless otherwise specified.

Unless otherwise specified, all steps of the present disclosure may be performed sequentially or may be performed randomly, and preferably, sequentially. For example, the method includes steps (a) and (b), indicating that the method may include steps (a) and (b) performed sequentially, or may include steps (b) and (a) performed sequentially. For example, the reference to that the method may further include step (c), indicating that step (c) may be added to the method in any order. For example, the method may include steps (a), (b) and (c), may further include steps (a), (c) and (b), may further include steps (c), (a) and (b), etc.

Unless otherwise specified, the phrase "include", "comprise", and "contain" in the present disclosure are intended to be open-ended or closed-ended. For example, the phrase "include", "comprise", and "contain" may mean that other components not listed are also be included or contained, or that only listed components are included or contained.

In the present disclosure, the term "or" is inclusive if not specifically stated. For example, the phrase "A or B" means "A, B, or both A and B". More specifically, condition "A or B" is satisfied by any one of the following conditions: A is true (or present) and B is false (or not present); A is false (or absent) and B is true (or present); or both A and B are true (or present).

Secondary batteries have been widely used in consumer electronics, electric vehicles and energy storage. For common lithium-ion secondary batteries, improvements in energy density have approached the theoretical limit. In order to meet future application scenarios involving higher energy density requirements such as high-endurance electric vehicles, electric aircraft, etc. a secondary battery with more energy density potential, for example, a secondary battery with a metal or alloy negative electrode is developed.

However, it is known that the metal or alloy negative electrode has a high reactivity and can hardly form a good solid electrolyte interface (SEI), which may dendritic growth morphology. Therefore, the secondary batteries may have poor cycle capability and safety risk, and the service time may be exhausted due to rapid lithium source consumption.

The design of the electrolyte is critical to improve the cyclability of a secondary battery with a metal and alloy negative electrode. Many ether-based electrolytes, especially partial high-concentration electrolytes based on ethers, have been used in metal negative electrode secondary battery systems in recent years and achieved good results.

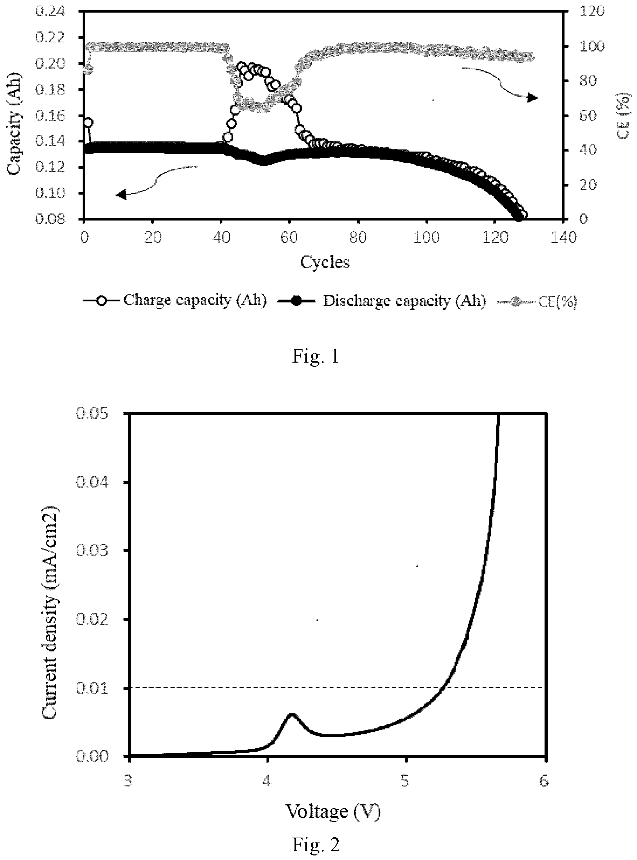

However, in the course of further evaluation of the ether-based electrolytes in the related art, the inventors found that, when the existing partial high-concentration electrolytes are used in a secondary battery with a metal negative electrode (e.g., a metal-lithium transition metal oxide battery), a systematic overcharge problem may occur in the secondary battery during long cycles (i.e., over 50 cycles). Unlike the known battery overcharge phenomena, such an overcharge phenomenon is "transient". In other words, such an overcharge problem occurs only for a short time (or within a certain number of cycles) during the cycling and then returns to the normal cycle state. For example, as illustrated in Fig. 1, in a long cycle procedure of a secondary battery containing an electrolyte in the related art (for example, LiFSI-DME-TTE system), in a number of certain cycles (about 40 to 65 cycles, as illustrated in Fig. 1), a charge capacity exceeds a rated capacity, but a discharge capacity remains normal or only slightly decreases. Subsequent to these cycles, in the following cycles, the above-mentioned overcharge phenomenon gradually decreases until it disappears and the cycling returns to a normal cycle state. Based on current research, the inventors believe that such a "transient" overcharge phenomenon may not significantly shorten the cycle life of cells and may not lead to performance dive. However, this is also the reason why such a "transient" overcharge phenomenon is somewhat concealed and difficult to find.

However, the transient overcharge problem in a secondary battery with a metal negative electrode should be particularly concerned. It is particularly worth mentioning that, although the "transient" overcharge of an individual cell seems to have little effect, due to the inclusion of a large number of identical cells assembled in series in the battery module product, such a transient overcharge of a large number of cells during cycling would tend to cause voltages beyond the safe range, while generating heat and gas and causing cell side reactions, which can be anticipated. This overcharge problem may cause irrepressible battery management difficulties and safety risks. Therefore, this "transient" overcharge problem, although concealed, is urgent to be solved urgently. Prior to the present disclosure, the existence of such a special overcharge phenomenon has not been recognized, not to mention the potential hazards in battery safety management.

In order to solve the above-mentioned problems, the present disclosure provides an electrolyte capable of avoiding the above-mentioned "transient" overcharge problem, thereby improving the safety of a secondary battery with a metal or alloy negative electrode and improving cycle performance. Electrolyte

An embodiment of the present disclosure provides an electrolyte, including:
a first solvent as represented by Formula I: 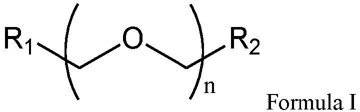 wherein:
   R₁ is selected from C1-C6 fluoroalkyl;
   R₂ is selected from a hydrogen atom, C1-C6 alkyl, and C1-C6 fluoroalkyl; and
   n represents 1 or 2, and
a second solvent selected from one or more of compounds represented by Formula II and Formula III: 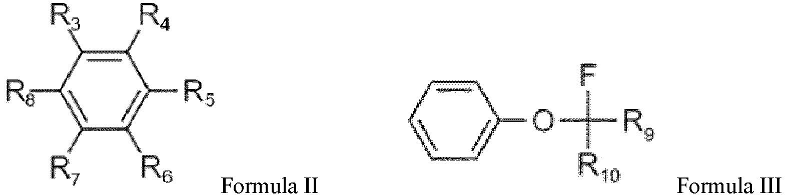 wherein R₃ to R₁₀ are each independently selected from a hydrogen atom, a fluorine atom, C1-C6 alkyl, and C1-C6 fluoroalkyl.

The electrolyte of the present disclosure can effectively avoid the above-mentioned "transient" overcharge problem in a long cycle of a secondary battery, especially a lithium-ion secondary battery with a metal or alloy negative electrode, thereby improving the cycle stability and safety of the battery. At the same time, the electrolyte of the present disclosure also has a higher oxidation stability and can prolong the cycle life of a secondary battery with a metal or alloy negative electrode.

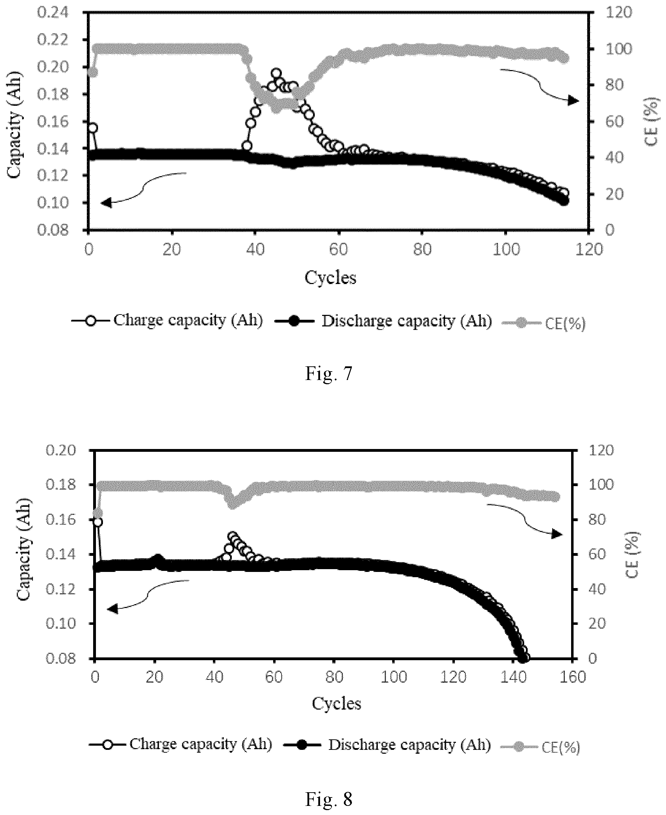

In order to not be confined to any theory, the inventors have found that the intrinsic oxidation resistance of the ether electrolytes in the related art is not so poor. For example, an oxidation stability window of dimethyl ether (DME)-1,1,2,2-difluoroethyl-2,2,3,3-difluoropropyl ether (TTE) electrolyte can reach 5.3V in a linear sweep voltammetry (LSV) test of Li-Al batteries (see Fig. 2). However, when the electrolyte is applied to, for example, a Li-NMC811 cell for long cycle, the aforementioned "transient" overcharge problem invariably occurred (for example, refer to Comparative Example 3 and Fig. 7 below). The electrolyte of the present disclosure has good oxidation resistance and can effectively avoid the occurrence of the "transient" overcharge phenomenon.

In some embodiments, in the Formula I, R₁ is selected from C1-C3 fluoroalkyl, and optionally, fluoromethyl. In some embodiments, more optionally, R₁ is monofluoromethyl or difluoromethyl. In any embodiment, in the Formula I, R₂ is selected from a hydrogen atom, C1-C3 alkyl, and C1-C3 fluoroalkyl, and optionally, selected from a hydrogen atom, methyl, fluoromethyl, ethyl, and fluoroethyl. In some embodiments, more optionally, R₂ is selected from a hydrogen atom, methyl, monofluoromethyl, difluoromethyl, ethyl, monofluoroethyl, and difluoroethyl.

In some embodiments, the first solvent represented by Formula I is selected from the following compounds:

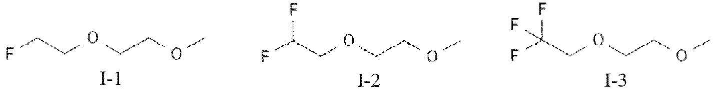

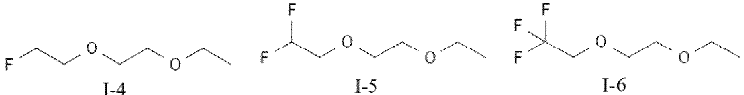

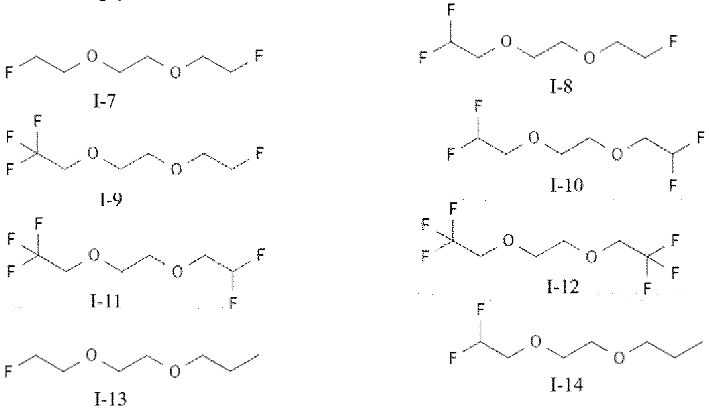

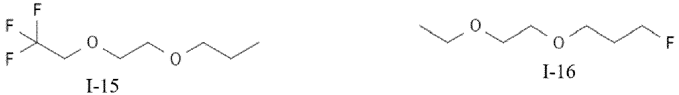

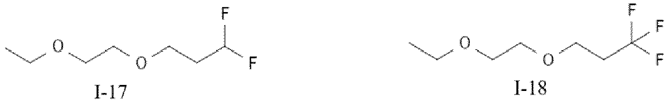

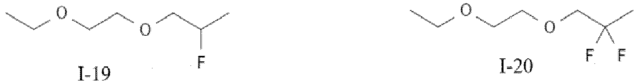

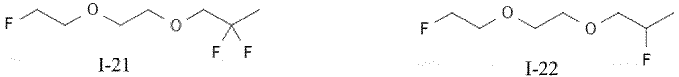

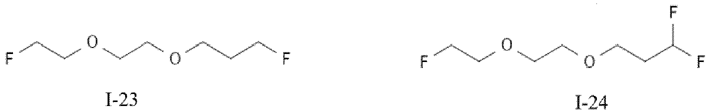

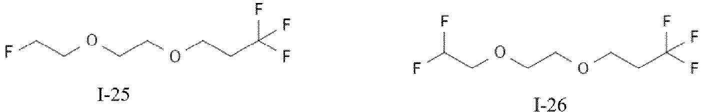

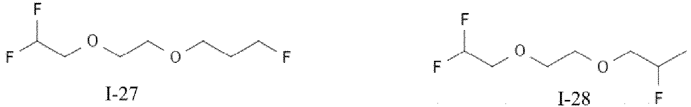

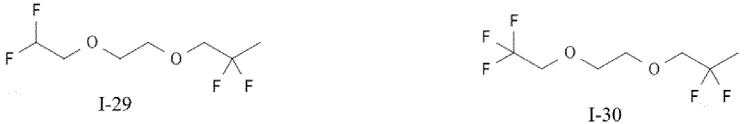

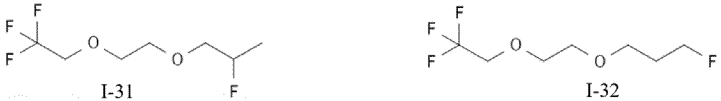

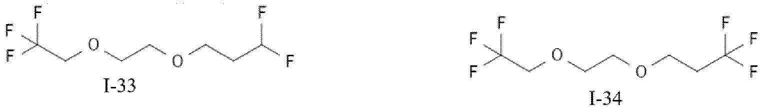

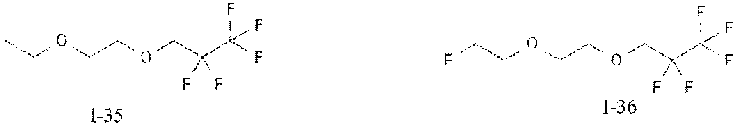

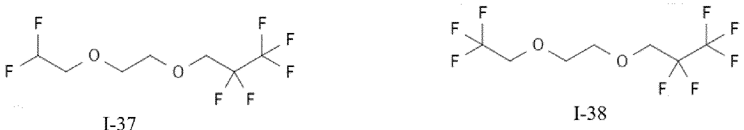

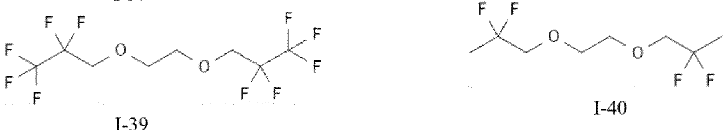

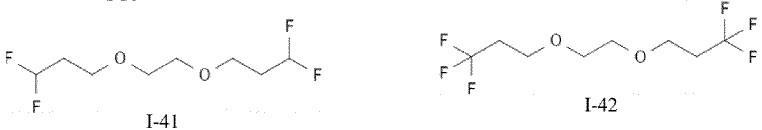

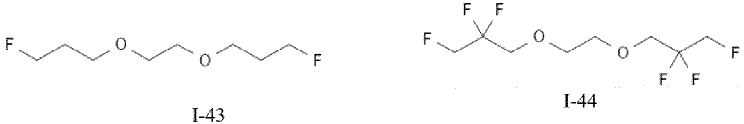

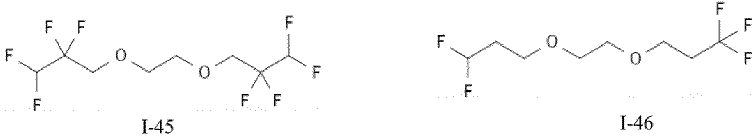

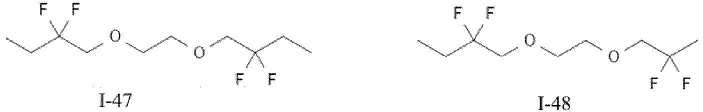

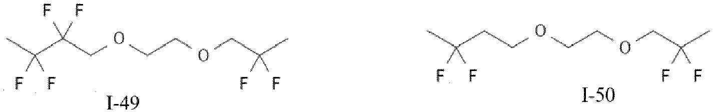

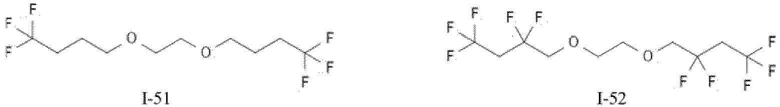

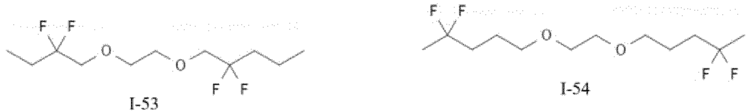

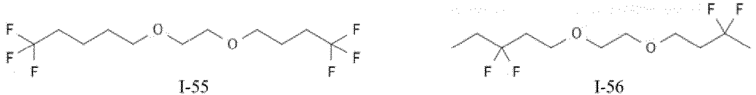

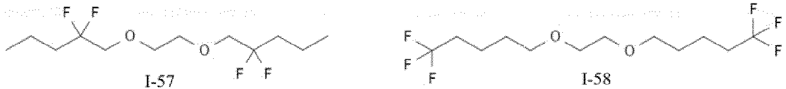

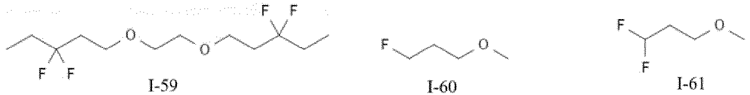

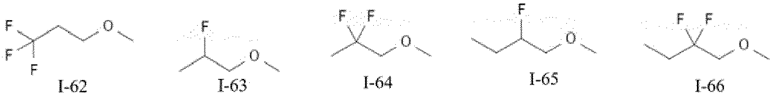

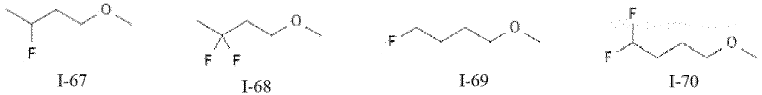

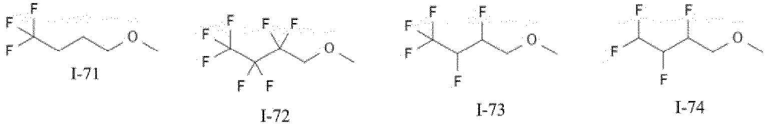

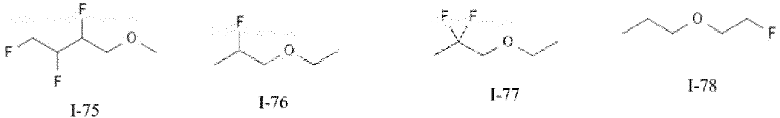

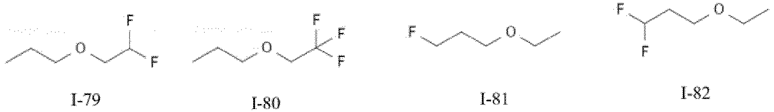

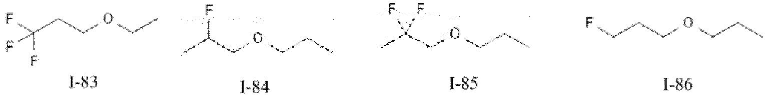

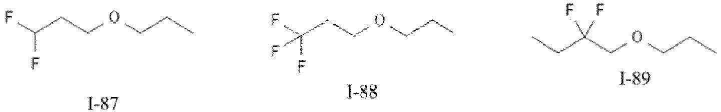

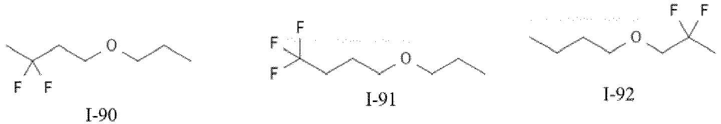

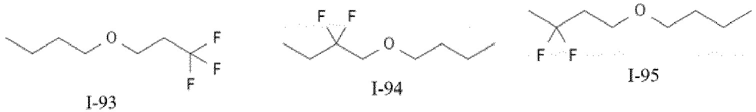

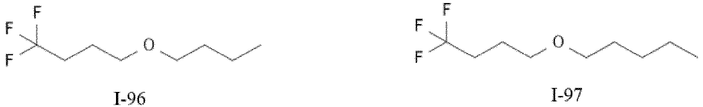

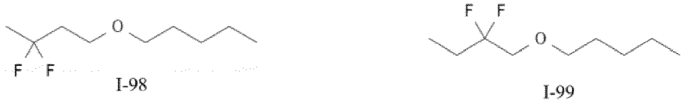

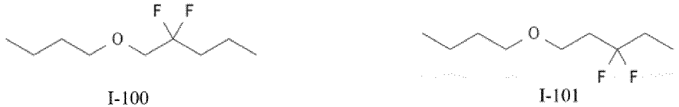

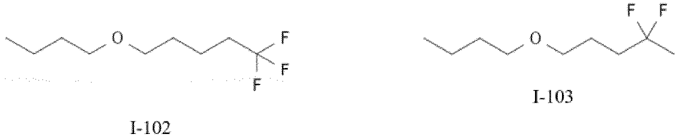

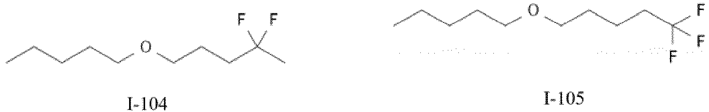

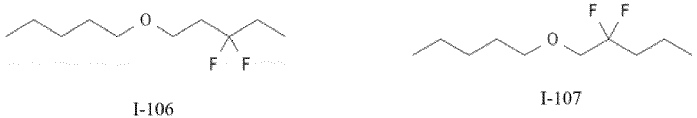

In some embodiments, the first solvent represented by Formula I is selected from at least one of Formulae 1-1 to 1-16, and Formulae I-60 to 1-71; and more optionally, at least one of formulae I-2 and I-65.

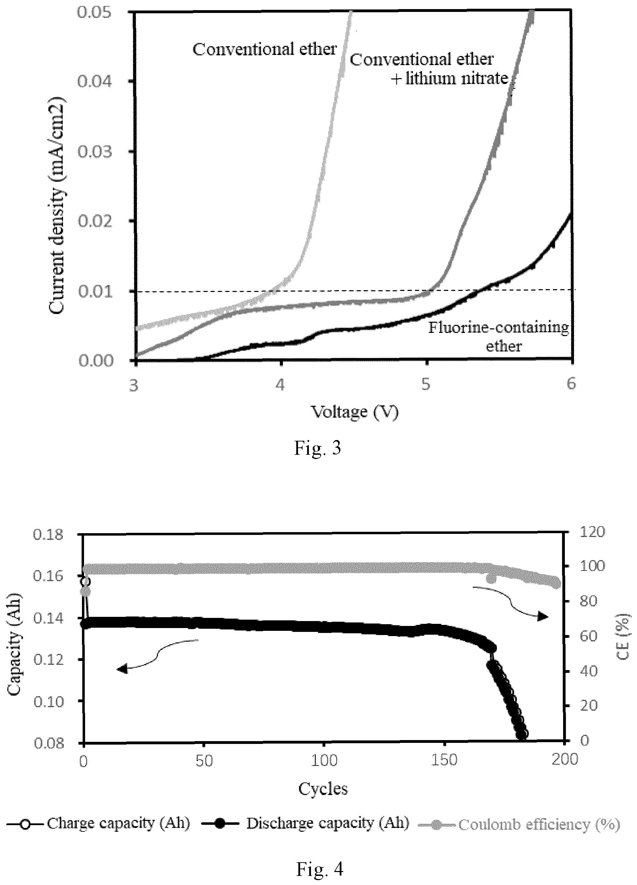

As the first solvent in the present disclosure, ethers having a smaller carbon chain length (e.g., C1-3 alkyl) and a lower amount of fluorine (e.g., monofluoro- or difluoro-substituted) are more preferred than alkyl ethers having longer carbon chain and/or higher amount of fluorine. The first solvent enables the electrolyte to have a higher boiling point and a higher oxidation stability, and can improve the oxidation stability of the positive electrode side thereof. At the same time, the first solvent has a good dissolving capacity for the electrolyte salt (for example, lithium bis(fluorosulfonyl)amide (LiFSI) can be dissolved in the first solvent to a concentration of 2M or more). Meanwhile, the electrolyte oxidation stability of the Li-Al half-cell LSV test reaches at least about 5.3V using the first solvent alone and at a concentration of 1M lithium bis(fluorosulfonyl)imide salt (see Fig. 3).

The lithium electrolyte salt cannot be dissolved or can be slightly dissolved in the second solvents represented by Formula II and Formula III, which are mutually soluble with the first solvent in any proportion without causing phase separation.

In some embodiments, in the Formula II, R₃ to R₈ are each independently selected from a hydrogen atom, a fluorine atom, and C1-C6 fluoroalkyl. Optionally, R₃ to R₈ are each independently selected from a hydrogen atom, a fluorine atom, and C1-C3 fluoroalkyl. In some embodiments, in the Formula II, R₃ to R₈ are each independently selected from a hydrogen atom, a fluorine atom, and fluoromethyl.

In some embodiments, the solvent represented by Formula II is selected from the following compounds:

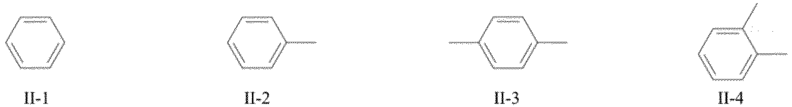

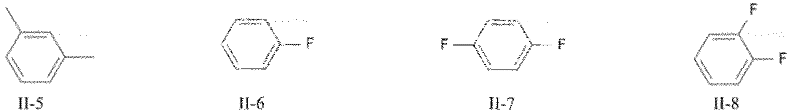

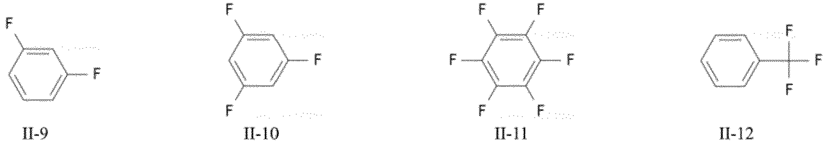

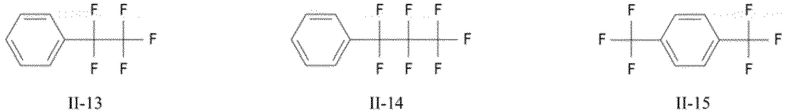

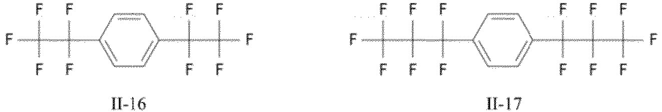

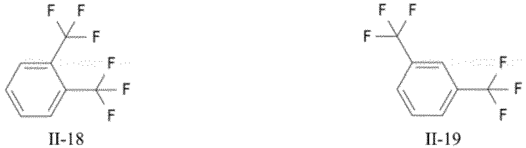

In some embodiments, the second solvent represented by Formula II is selected from at least one of difluorobenzene and fluoromethylbenzene, optionally, at least one of difluorobenzene and trifluoromethylbenzene, and more optionally, at least one of the compounds selected from Formulas II-7, II-8, II-9, and II-12.

In some embodiments, in the Formula III, R₉ to Rio are each independently selected from a hydrogen atom, a fluorine atom, C1-C6 alkyl, and C1-C6 fluoroalkyl. In some embodiments, optionally, R₉ to R₁₀ are each independently selected from a hydrogen atom, a fluorine atom, C1-C3 alkyl, and C1-C3 fluoroalkyl. In some embodiments, optionally, R₉ to Rio are each independently selected from a hydrogen atom or a fluorine atom.

In fluoroalkyl described herein, one or more hydrogen atoms of alkyl are each independently substituted with a fluorine atom.

In some embodiments, the solvent represented by Formula III is selected from the following compounds:

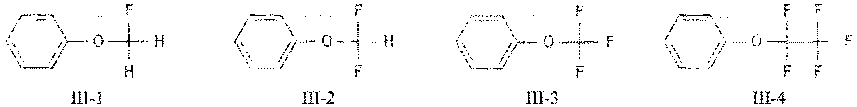

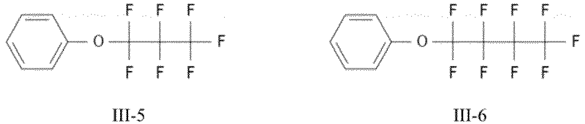

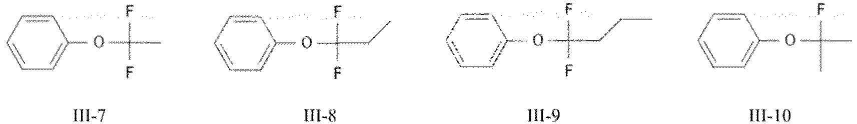

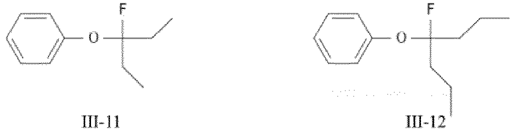

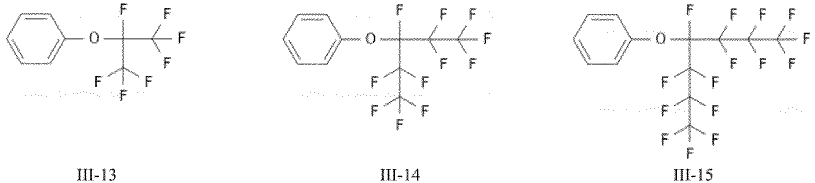

In some embodiments, the second solvent represented by Formula III is selected from fluoromethoxybenzene, and optionally, selected from at least one of the compounds represented by Formulae III-1, III-2, and III-3. In some embodiments, the solvent represented by Formula III is the compound represented by Formula III-3.

In some embodiments, the second solvent is the compound represented by Formula III.

In the present disclosure, the first solvent and the second solvent can cooperatively avoid the occurrence of an overcharge phenomenon. In addition, the second solvent has a benzene ring structure, and its conjugated large *π* bond of the second solvent can inhibit the loss of electrons in the electrochemical process of the solvent molecules, thereby improving the oxidation resistance of the electrolyte. When the benzene ring is directly connected to the oxygen atom, an electron cloud of the oxygen atom is also attracted, and the oxidation resistance of the benzene ring is further improved by adding the conjugated bond of the benzene ring.

In some embodiments, a mass ratio of the first solvent to the second solvent ranges from 0.5 to 3, optionally, from 0.7 to 1.5, and more optionally, 0.9 to 1.1. In any embodiment, the mass ratio of the first solvent to the second solvent is 1. When the mass ratio of the two solvents is in the above-mentioned range, the transient overcharge phenomenon can be avoided, an electrolyte salt can be sufficiently dissolved in the electrolyte, and the electrolyte can have good oxidation resistance and long cycle life.

In some embodiments, the of the present disclosure electrolyte further includes an antioxidant. Optionally, the antioxidant is selected from at least one of lithium nitrate and lithium perchlorate. In some embodiments, the antioxidant is lithium nitrate. By using the first and second solvents in combination with the antioxidant, the overcharge phenomenon during the long cycle of the secondary battery with a lithium negative electrode, especially the secondary battery with a lithium negative electrode-ternary positive electrode, can be more effectively avoided. The addition of the above-mentioned antioxidant additives (in particular in combination with fluoroether) in the electrolyte, the local solvation structure at the interface of the positive electrode and the electrolyte can be modified: its anionic moieties (e.g., nitrate and perchlorate) can be attracted to the electric double layer on the surface of the ternary positive electrode during charging and bound more tightly with the active ions (e.g., lithium ions in the case of lithium ion batteries), reducing the degree of participation of the solvent molecules around the active ions in the electric double layer, thereby reducing the contact of the solvent molecules with the ternary positive electrode, reducing the catalytic oxidation of the solvent molecules by transition metals, and further protecting the positive electrode to prolong the cycle life.

In some embodiments, a concentration of the antioxidant ranges from 0.5 wt% to 3 wt%, optionally, from 0.7 wt% to 1.5 wt%, and more optionally, from 0.9 wt% to 1.1 wt%, based on a total weight of the electrolyte. The addition of the antioxidant can further increase a threshold voltage value of the oxidation stability, while further prolonging the cycle life. At the same time, if the concentration of the antioxidant is within the above-mentioned range, the above-mentioned effects can be sufficiently exerted, while preventing the normal transport of lithium ions from being affected by the excessive antioxidant that may cause a shortening of cycle life.

In some embodiments, the electrolyte of the present disclosure further includes a fluorine-containing electrolyte salt, and, and optionally, the fluorine-containing electrolyte salt is selected from at least one of lithium bis(fluorosulfonyl)imide, lithium hexafluorophosphate, lithium tetrafluoroborate, lithium hexafluoroarsenate, lithium bis(trifluoromethanesulfonylimide), lithium trifluoromethanesulfonate, lithium difluorophosphate, lithium difluoro(oxalato)borate, lithium difluorobis(oxalato)phosphate, and lithium tetrafluoro(oxalato)phosphate. In some embodiments, and, and optionally, the fluorine-containing electrolyte salt is lithium bis(fluorosulfonyl)imide. The above-mentioned fluorine-containing electrolyte salt has good solubility in the electrolytic solution of the present disclosure (particularly, in the first solvent), and can be decomposed on the surface of a metal or alloy negative electrode (e.g., a lithium negative electrode) to form an inorganic fluorine-rich SEI component, thereby improving the interfacial stability of the negative electrode and further prolonging the cycle life of the secondary battery with the metal or alloy negative electrode.

In some embodiment, a concentration of the fluorine-containing electrolyte salt ranges from 0.5M to 3M, and optionally, 1M. With the above-mentioned concentration, the cycle life of the secondary battery can be prolonged.

In some embodiments, optionally, the electrolyte further includes an additive. For example, the additive may include a negative electrode film-forming additive, a positive electrode film-forming additive, and may further include an additive capable of improving certain properties of the battery, such as an additive for improving overcharge properties of the battery, an additive for improving high-temperature or low-temperature properties of the battery, etc.

### Secondary Battery, Battery Module, Battery Pack and Electrical Device

Another embodiment of the present disclosure providea a secondary battery including the electrolyte as described above.

In some embodiments, the secondary battery is a lithium-ion secondary battery.

In some embodiments, the secondary battery is a secondary battery with a metal or alloy negative electrode. In some embodiments, the secondary battery is a secondary battery with a lithium negative electrode, and optionally, a secondary battery with a lithium negative electrode and a lithium transition metal oxide positive electrode.

The secondary battery provided by the present disclosure is more stable during cycling without an overcharge phenomenon, while achieving a longer cycle life, due to the inclusion of the electrolyte of the present disclosure.

Generally, a secondary battery includes a positive electrode plate, a negative electrode plate, an electrolyte, and a separator. During charge and discharge of the battery, active ions are intercalated and deintercalated between the positive electrode plate and the negative electrode plate. The electrolyte serves to conduct ions between the positive electrode plate and the negative electrode plate. The separator is arranged between the positive electrode plate and the negative electrode plate, and mainly functions to prevent the positive and negative electrodes from being short-circuited, and at the same time can pass ions.

### [Positive electrode plate]

The positive electrode plate includes a positive electrode current collector and a positive electrode film layer disposed on at least one surface of the positive electrode current collector. The positive electrode film layer includes a positive electrode active material selected from a lithium transition metal oxide and/or a lithium-containing phosphate having an olivine structure. In some embodiments, the positive electrode active material is selected from lithium transition metal oxides. In some embodiments, the lithium transition metal oxide is selected from lithium cobalt oxide, lithium nickel oxide, lithium manganese oxide, lithium nickel manganese oxide, lithium nickel cobalt manganese oxide, lithium nickel cobalt aluminum oxide, or combinations thereof.

Examples of lithium transition metal oxide may include, but are not limited to, lithium cobalt oxide (e.g., LiCoO₂), lithium nickel oxide (e.g., LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also referred to as NCM₃₃₃ for short), LiNi_{0.5}Co_{0.2}Mn_{0.3}O₂ (also referred to as NCM₅₂₃ for short), at least one of LiNi_{0.5}Co_{0.25}Mn_{0.25}O₂ (also referred to as NCM₂₁₁ for short), LiNi_{0.6}Co_{0.2}Mn_{0.2}O₂ (also referred to as NCM₆₂₂ for short), LiNi_{0.8}Co_{0.1}Mn_{0.1}O₂ (also referred to as NCMsn for short), LiNi_{0.96}Co_{0.02}Mn_{0.02}O₂ (also referred to as Ni₉₆ for short), lithium nickel cobalt aluminum oxide (such as LiNi_{0.85}Co_{0.15}Al_{0.05}O₂), and modified compounds thereof, and the like.

Examples of the lithium-containing phosphate having the olivine structure may include, but are not limited to, at least one of lithium iron phosphate (such as LiFePO₄ (also referred to as LFP for short)), a composite of lithium iron phosphate and carbon, lithium manganese phosphate (such as LiMnPO₄), a composite of lithium manganese phosphate and carbon, lithium iron manganese phosphate, a composite of lithium iron manganese phosphate and carbon.

As an example, the positive electrode current collector has two surfaces opposite to each other in its thickness direction, and the positive electrode film layer can be provided on either or both of the two opposite surfaces of the positive electrode current collector.

In some embodiments, both sides of the positive electrode current collector are provided with positive electrode film layers.

In some embodiments, the positive electrode current collector may be a metal foil or a composite current collector. For example, an aluminum foil may be used as the metal foil. The composite current collector may include a polymer material base layer and a metal layer formed on at least one surface of the polymer material base layer. The composite current collector may be formed by forming a metallic material (aluminum, aluminum alloy, nickel, nickel alloy, titanium, titanium alloy, silver, silver alloy, etc.) on a polymer material substrate (for example, a substrate of polypropylene (PP), polyethylene terephthalate (PET), polybutylene terephthalate (PBT), polystyrene (PS), polyethylene (PE), etc.).

In some embodiments, the positive electrode active material may employ a positive electrode active material for a battery known in the art. As an example, the positive electrode active material may include at least one of the following materials: lithium-containing phosphates of the olivine structure, lithium transition metal oxides and their respective modified compounds. However, the present disclosure is not limited to these materials, and other conventional materials that can be used as a positive electrode active material for a battery can also be used. These positive electrode active materials may be used individually or in combination of two or more.

In some embodiments, optionally, the positive electrode film layer may further include a binder. As an example, the binder may include at least one of polyvinylidene fluoride (PVDF), tetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and a fluorine-containing acrylate resin.

In some embodiments, optionally, the positive electrode film layer may further include a conductive agent. As an example, the conductive agent may include at least one of superconducting carbon, acetylene black, carbon black, ketjen black, carbon dots, carbon nanotubes, graphene, and carbon nanofibers.

In some embodiments, the positive electrode plate can be prepared by: dispersing the above-mentioned components for preparing the positive electrode plate, such as a positive electrode active material, a conductive agent, a binder, and any other components, in a solvent (such as N-methyl pyrrolidone) to form a positive electrode slurry; coating the positive electrode slurry on the positive electrode current collector; and performing drying, cold pressing, and other processes to obtain the positive electrode plate.

### [Negative electrode plate]

A negative electrode plate includes a negative electrode current collector and a negative electrode film layer disposed on at least one surface of the negative electrode current collector. The negative electrode film layer includes a negative electrode active material selected from pure metal, intermetallic alloy, or metal-nonmetal alloy. In some embodiments, the metal is selected from lithium (Li), tin (Sn), zinc (Zn), aluminum (Al), magnesium (Mg), silver (Ag), gold (Au), gallium (Ga), indium (In), foil (Pt), or combinations thereof. In some embodiments, the non-metal is selected from boron (B), carbon (C), silicon (Si), or combinations thereof.

These negative electrode active materials may be used individually or in combination of two or more.

As an example, the negative electrode current collector has two surfaces opposite to each other in its thickness direction, and the negative electrode film layer can be provided on either or both of the two surfaces opposed to the negative electrode current collector.

In some embodiments, the negative electrode current collector may be a metal foil or a composite current collector. For example, a copper foil may be used as the metal foil. The composite current collector may include a polymer material substrate and a metal layer formed on at least one surface of the polymer material base layer. The composite current collector may be formed by forming a metallic material (copper, copper alloy, nickel, nickel alloy, titanium, titanium alloy, silver, silver alloy, etc.) on a polymer material substrate (for example, a substrate of polypropylene (PP), polyethylene terephthalate (PET), polybutylene terephthalate (PBT), polystyrene (PS), polyethylene (PE), etc.).

In some embodiments, optionally, the negative electrode film layer may further include a binder. The binder may be selected from at least one of styrene butadiene rubber (SBR), polyacrylic acid (PAA), sodium polyacrylate (PAAS), polyacrylamide (PAM), polyvinyl alcohol (PVA), sodium polyacrylate (PAAS), sodium alginate (SA), polymethacrylic acid (PMAA), and carboxymethyl chitosan (CMCS).

In some embodiments, optionally, the negative electrode film layer may further include a conductive agent. The conductive agent may be selected from at least one of superconducting carbon, acetylene black, carbon black, ketjen black, carbon dots, carbon nanotubes, graphene, and carbon nanofibers.

In some embodiments, optionally, the negative electrode film layer may further include other adjuvants, such as a thickener (e.g., sodium carboxymethyl cellulose (CMC-Na)), etc.

In some embodiments, negative electrode plates can be prepared by: dispersing the above-mentioned components for preparing the negative electrode plate, such as a negative electrode active material, a conductive agent, a binder, and any other components, in a solvent (such as deionized water) to form a negative electrode slurry; coating the negative electrode slurry on the negative electrode current collector; and performing drying, cold pressing, and other procedures to obtain a negative electrode plate.

### [Separator]

In some embodiments, the secondary battery further includes a separator. The type of the separator is not specifically limited in the present disclosure, and any known separator with a porous structure having good chemical stability and mechanical stability can be selected. In some embodiments, the separator may be, but not limited to, a porous polyethylene film, a porous polypropylene film, a porous polyimide film, and any of various porous polymer film.

The separator may be a single-layer film or a multi-layer composite film, which is not specifically limited. When the separator is a multi-layer composite film, the materials of the respective layers may be the same or different, which is not specifically limited.

In some embodiments, the positive electrode plate, the negative electrode plate, and the separator can be assembled into an electrode assembly by a winding process or a lamination process.

In some embodiments, the secondary battery may include an outer package. The outer package may be used to encapsulate the electrode assembly and the electrolyte.

In some embodiments, the outer package of the secondary battery may be a hard case such as a hard plastic case, an aluminum case, a steel case, and the like. The outer package of the secondary battery may also be a soft package, such as a pouch-type soft package. The material of the soft bag may be plastic. As the plastic, polypropylene, polybutylene terephthalate, polybutylene succinate, etc. may be listed.

The shape of the secondary battery is not specifically limited in the present disclosure, and it may be cylindrical, square or any other shape.

In still another embodiment of the present disclosure, a battery module including the above-mentioned secondary battery is provided.

In yet another embodiment of the present disclosure, a battery pack including the above-mentioned battery module is provided.

In still another embodiment of the present disclosure, an electrical device including at least one selected from the above-mentioned secondary battery, battery module, or battery pack is provided.

In the following, the secondary battery, the battery module, the battery pack, and the electrical device are described.

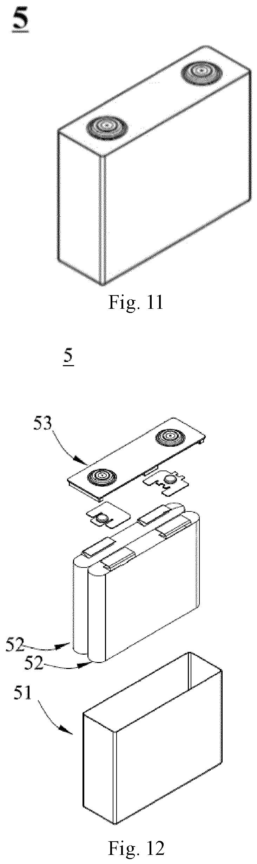

As an example, Fig. 11 illustrates a secondary battery 5 having a square structure.

In some embodiments, referring to Fig. 12, the outer package may include a housing 51 and a cover plate 53. The housing 51 may include a bottom plate and a side plate connected to the bottom plate. The bottom plate and the side plate enclose to define a receiving cavity. The housing 51 has an opening in communication with the receiving cavity, and the cover plate 53 can cover the opening to seal the receiving cavity. The positive electrode plate, the negative electrode plate, and the separator can be assembled into an electrode assembly 52 by a winding process or a lamination process. The electrode assembly 52 is encapsulated in the receiving cavity and infiltrated by the electrolyte. One or more electrode assemblies 52 may be contained in the secondary battery 5, and a person skilled in the art is able to make a selection according to specific actual requirements.

In some embodiments, the secondary batteries can be assembled into a battery module. The number of secondary batteries contained in the battery module can be one or more, and the specific number can be selected by a person skilled in the art according to the application and capacity of the battery module.

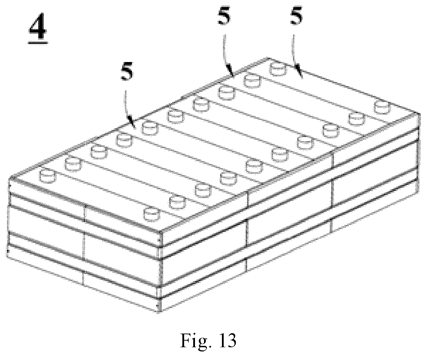

As an example, Fig. 13 illustrates a battery module 4. Referring to Fig. 13, in the battery module 4, a plurality of secondary batteries 5 may be sequentially arranged along a length direction of the battery module 4. The plurality of secondary batteries 5 may be arranged in any other manner. Further, the plurality of secondary batteries 5 may be fixed via fasteners.

Optionally, the battery module 4 may further include a housing having a receiving space, in which the plurality of secondary batteries 5 are received.

In some embodiments, the above-mentioned battery modules can also be assembled into a battery pack. The number of battery modules contained in the battery pack can be one or more, and the specific number can be selected by a person skilled in the art according to the application and capacity of the battery pack.

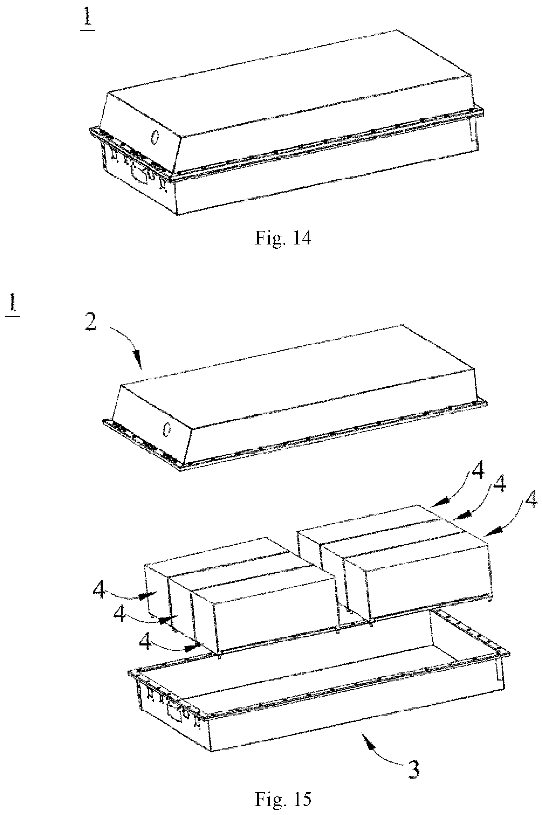

As an example, Fig. 14 and Fig. 15 illustrate a battery pack 1. Referring to Fig. 14 and Fig. 15, the battery pack 1 includes a battery box and a plurality of battery modules 4 disposed in the battery box. The battery box includes an upper box 2 and a lower box 3. The upper box 2 can be disposed on and cover the lower box 3 to define an enclosed space for accommodating the battery modules 4. The plurality of battery modules 4 may be arranged in the battery box in an arbitrary manner.

In addition, the present disclosure further provides an electrical device including at least one of the secondary battery, the battery module, or the battery pack provided in the present disclosure. The secondary battery, the battery module, or the battery pack may be used as a power source for the electrical device as well as an energy storage unit for the electrical device. The electrical device may include, but not limited to, mobile equipment (e.g., mobile phones, notebook computers, etc.), electric vehicles (e.g., pure electric vehicles, hybrid electric vehicles, plug-in hybrid electric vehicles, electric bicycles, electric scooters, electric golf carts, electric trucks, etc.), electric trains, ships and satellites, energy storage systems, etc.

As the electrical device, the secondary battery, the battery module, or the battery pack may be selected according to its usage requirements.

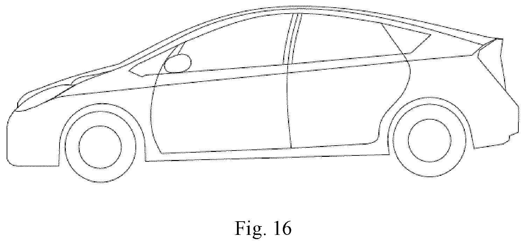

As an example, Fig. 16 illustrates an electrical device. The electrical device is a pure electric vehicle, a hybrid electric vehicle, or a plug-in hybrid electric vehicle. To meet the requirements on high power and high energy density of the secondary battery for the electrical device, the battery pack or battery module may be employed.

As another example, the device may be a mobile phone, tablet computer, notebook computer, etc. The device is generally required to be light and thin, and a secondary battery may be used as a power source.

### Examples

Embodiments of the present disclosure will be described below. The embodiments described below are exemplary and intended to be illustrative of the present disclosure, and they should not be construed as limiting the present disclosure. Where specific techniques or conditions are not specified in the embodiments, they are performed according to techniques or conditions described in the literature in the art or according to the product manual. The reagents or instruments used, without indicating the manufacturer, are conventional and commercially available products.

### Example 1

### 1. Preparation

### 1.1 Preparation of electrolyte:

The first solvent of formula I-2 and the second solvent of formula III-3 were mixed in equal mass and stirred to obtain a colorless transparent homogeneous mixed solvent. 0.935 g of lithium bis(fluorosulfonyl)imide was weighted and added into 5 ml of the above-mentioned mixed solvent. The mixture was stirred thoroughly to form a colorless transparent solution with concentration of 1M, i.e., the required electrolyte.

### 12 Preparation of positive electrode plate:

The positive electrode active material LiNi_{0.8}Co_{0.1}Mn_{0.1}O₂ (NCM₈₁₁), the conductive agent acetylene black, and the binder PVDF were mixed in a mass ratio of 98:1:1, a solvent N-methyl pyrrolidone (NMP) was added and stirred until the system was uniform to obtain a positive electrode slurry (with a solid content of 70 wt%). The positive electrode slurry was evenly coated on both surfaces of the positive electrode current collector, i.e., an aluminum foil, at a loading of about 25 mg/cm², dried at room temperature, transferred to an oven for further drying, and then cut into a rectangle of 40 mm*50 mm as the positive electrode plate, with a positive electrode surface capacity of 3.5 mAh/cm².

### 1.3 Preparation of negative electrode plate:

A lithium foil (50 µm) was applied to one surface of a copper foil (12 µm) by rolling, and then cut into a rectangular shape of 41 mm * 51 mm as a negative electrode plate.

### 1.4 Separator:

The porous polyethylene membrane was selected and cut into a rectangle of 45 mm*55 mm for use.

### 1.5 Assembly of secondary battery:

A piece of the cut-out positive electrode was matched with two pieces of the cut-out negative electrodes, the positive and negative electrodes were isolated by the above-mentioned separator disposed in the middle, and wrapped in an aluminum-plastic film bag to form a laminated dry cell. 0.3g of the electrolyte prepared as above was injected, and vacuum hot-press packaging was performed on the aluminum-plastic film bag. After standing at room temperature for at least 6 hours, the cycle test in 2.1 below started. The secondary battery prepared in this way had a rated capacity of 140 mAh.

### 2. Test

### 2.1 Cycle test for the secondary battery:

The ambient temperature of the cell cycle was set to 25°C, and the secondary battery obtained in section 1.5 above was subjected to a charge-discharge cycle at a rate of 0.5C (i.e., 70 mA) using a Xinwei cycle tester. The cut-off voltages for charging and discharging were set to 4.3 V and 2.8 V, respectively. When the discharge capacity attenuated to 80% of the first cycle discharge capacity, the battery life was considered to be cut-off, at which the number of cycles at this time was the cycle life.

Meanwhile, during the cycling, the cycle charge/discharge capacity, and Coulomb efficiency (CE) of the corresponding tested battery are shown in Fig. 4. It can be seen from Fig. 4 that the cycle life of the battery was 171 cycles. Throughout the life cycle, no overcharge phenomenon, i.e., the charge capacity was significantly higher than the rated capacity, occurs.

### 2.2 Li-Al half-cell LSV test for electrolyte oxidation stability

The negative electrode (50 µm) prepared in above section 1.3 was taken, an aluminum foil was used as the positive electrode and cut into discs with a diameter of 1 cm², and a porous polyethylene membrane with the same size was used as the separator, 20 µl of the electrolyte prepared in the above section 1 was injected, to assemble a coin cell to be tested.

The current response of the coin cell was recorded using a Solartron electrochemical workstation by performing a linear sweep voltammetry (LSV) test at a scan rate of 5 mV/s over a voltage interval from open circuit voltage to 6 V. When the current density reached 10 µA/cm². the corresponding voltage was the critical value of the oxidation stability of the electrolyte.

The oxidation stability of the electrolyte obtained in Example 1 was determined to be 5.4V by this method.

### Example 2 to Example 9

Referring to Example 1, an electrolyte and a secondary battery were prepared and subjected to the corresponding tests, and merely the first and second solvents were different in these examples.

### Example 10 to Example17

Referring to Example 1, an electrolyte and a secondary battery were prepared and subjected to the corresponding tests, and merely the mass ratios of the first solvent to the second solvent were different in these embodiments.

### Comparative example 1

A conventional ether electrolyte in the related art was prepared as follows and tested with reference to Example 1.

0.935 g of lithium bis(fluorosulfonyl)imide was weighted and added into 5 ml of ethylene glycol dimethyl ether (DME) solvent. The mixture was stirred thoroughly to form a colorless transparent electrolyte with concentration of 1M for oxidation stability test and long-cycle test of liquid lithium secondary battery.

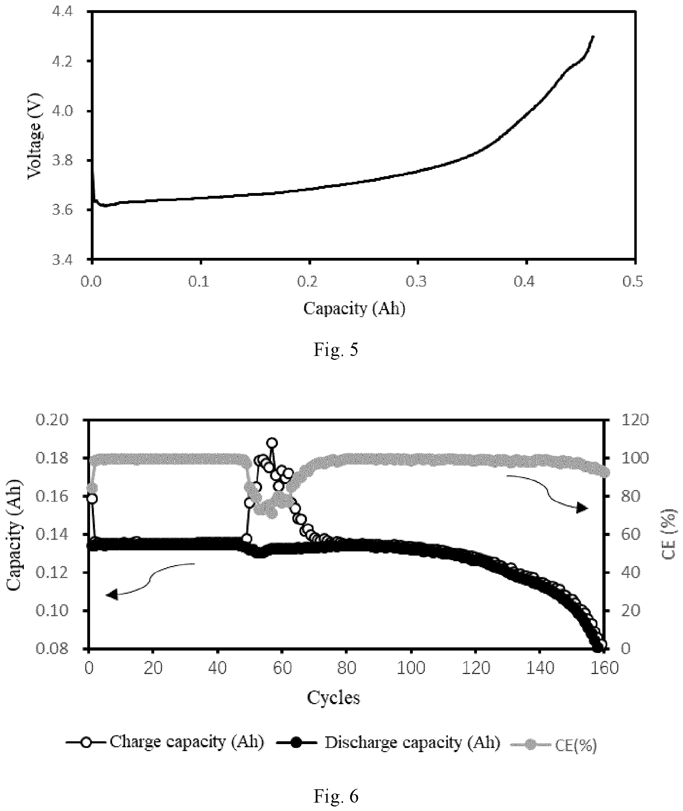

The oxidation stability of the electrolyte was tested to be 4V. Referring to Fig. 5, in the liquid lithium secondary battery, a severe overcharge occurred at the first cycle; and the cell with a rated capacity of 140 mAh was charged to 450 mAh before reaching the cut-off voltage, indicating that significant oxidative decomposition of the electrolyte occurred.

### Comparative example 2

A fluoroether-based electrolyte in the related art was prepared as follows and tested with reference to Example 1.

0.935 g of lithium bis(fluorosulfonyl)imide as weighted and added into 5 ml of solvent of Fomula I-2. The mixture was stirred thoroughly to form a colorless transparent electrolyte with concentration of 1M for oxidation stability test and long-cycle test of liquid lithium secondary battery.

The oxidation stability of the electrolyte was tested to be 5.4V. Referring to Fig. 6, in the liquid lithium secondary battery, a slight overcharge phenomenon occurred in the range of about 50 to 70 cycles during the cycling, but the discharge capacity in this range was less affected and recovered by itself, and the cycle life was 146 cycles.

### Comparative example 3

A partial high-concentration electrolyte in the related art was prepared as follows and tested with reference to Example 1.

Ethylene glycol dimethyl ether (DME) and 1,1,2,2-difluoroethyl-2,2,3,3-difluoropropyl ether (TTE) were mixed in equal mass and stirred to form a colorless transparent homogeneous liquid for use. 0.935 g of lithium bis(fluorosulfonyl)imide was added to 5 ml of the above mixed solvent and stirred thoroughly to form a colorless transparent solution with a concentration of 1M, which was used for subsequent performance testing and cell cycling.

The oxidation stability of the electrolyte was tested to be 5.3 V. Referring to Fig. 7, in the liquid lithium secondary battery, a relatively obvious overcharge phenomenon occurred in the range of about 40 to 60 cycles during the cycling, but the discharge capacity in this range was less affected and can recover by itself, and the cycle life was 110 cycles.

### Comparative example 4

A partial high-concentration electrolyte in the related art was prepared as follows and tested with reference to Example 1.

Ethylene glycol diethyl ether (DEE) and 1,2-(1,1,2, tetrafluoroethoxy)-ethane (TFE) were mixed in equal mass and stirred to form a colorless transparent homogeneous liquid for use. 0.935 g of lithium bis(fluorosulfonyl)imide was added to 5 ml of the above mixed solvent and stirred well to form a colorless transparent solution with a concentration of 1M, which was used for subsequent performance testing and cell cycling.

The oxidation stability of the electrolyte was tested to be 5.3 V. Referring to Fig. 8, in the liquid lithium secondary battery, an overcharge phenomenon occurred in the range of about 45 to 55 cycles during the cycling, but the discharge capacity in this range was less affected and can recover by itself, and the cycle life is 135 cycles.

The electrolytes and performance test results in Example 1 to Example 16 and Comparative Example 1 to Comparative Example4 described above are shown in Table 1 below.

**[Table 1]**

| **Serial number** | **First solvent** | **Second solvent** | **Mass ratio of solvents *** | **Concentration of electrolyte salt (M)** | **Oxidation stability critical voltage (V)** | **Cycle life (cycles)** | **Overcharge occurred or not?** |
|---|---|---|---|---|---|---|---|
| Example 1 | I-2 | III-3 | 1 | 1 | 5.4 | 171 | No |
| Example 2 | I-65 | III-3 | 1 | 1 | 5.4 | 167 | No |
| Example 3 | I-10 | II-7 | 1 | 1 | 5.5 | 160 | No |
| Example 4 | I-61 | III-3 | 1 | 1 | 5.5 | 155 | No |
| Example 5 | I-2 | III-1 | 1 | 1 | 5.5 | 154 | No |
| Example 6 | I-2 | II-8 | 1 | 1 | 5.5 | 156 | No |
| Example 7 | I-2 | II-9 | 1 | 1 | 5.5 | 151 | No |
| Example 8 | I-2 | II-12 | 1 | 1 | 5.6 | 148 | No |
| Comparative example 1 | DME | - | - | 1 | 4 | 1 | Yes |
| Comparative example 2 | I-2 | - | | 1 | 5.4 | 146 | Yes |
| Comparative example 3 | DME | TTE | 1 | 1 | 5.3 | 110 | Yes |
| Comparative example 4 | DEE | TFE | 1 | 1 | 5.3 | 135 | Yes |
| Example 9 | I-2 | III-3 | 0.5 | 1 | 5.6 | 152 | No |
| Example 10 | I-2 | III-3 | 0.7 | 1 | 5.5 | 159 | No |
| Example 11 | I-2 | III-3 | 0.9 | 1 | 5.5 | 167 | No |
| Example 12 | I-2 | III-3 | 1.1 | 1 | 5.5 | 169 | No |
| Example 13 | I-2 | III-3 | 1.5 | 1 | 5.4 | 161 | No |
| Example 14 | I-2 | III-3 | 3 | 1 | 5.4 | 154 | No |
| Example 15 | I-2 | III-3 | 0.3 | 1 | 5.6 | 148 | No |
| Example 16 | I-2 | III-3 | 4 | 1 | 5.3 | 149 | No |

| | | | | | | | |
|---|---|---|---|---|---|---|---|
| *The "mass ratio of solvent" herein means a mass ratio of the first solvent to the second solvent. In the following, the same expression denotes synonymous meaning. | | | | | | | |

It can be seen from Table 1 that the electrolyte of the present disclosure can effectively avoid the above-mentioned "transient" overcharge problem of the secondary battery in a long cycle, and also has a relatively high oxidation stability critical voltage (i.e., high oxidation stability), and can prolong cycle life. The conventional ether-based electrolyte of Comparative Example 1 is difficult to cycle normally in the secondary battery with a lithium negative electrode-ternary positive electrode. As for Comparative example 2, when the fluorine-containing solvent is used alone, although the oxidation stability can be improved, the overcharge problem in the long cycle cannot be avoided.

### Example 17 to Example 25

Example 17 differs from Example 1 in that, after preparing a colorless transparent solution with a concentration of 1 M, lithium nitrate powder was added thereto such that the mass ratio of the solution to lithium nitrate was 99: 1, and the solution was added and stirred sufficiently to form a colorless transparent electrolyte, i.e., a required electrolyte.

Example 18 to Example 25 differ from Example 17 in that the mass ratios of first and/or second solvent were different.

### Example 26 to 39

Example 26 differs from Example 17 in that the first and second solvents were different. Example 27 to Example 32 differ from Example 26 in that the mass ratio of the first solvent to the second solvent was different. Example 33 differs from Example 17 in that the first and second solvents were different. Example 34 to Example 39 differ from Example 33 in that the mass ratio of the first solvent to the second solvent is different.

### Example 40 to Example 46

Example 40 to Example 46 differ from Example 17 to Example 25 in the added antioxidant.

### Comparative example 5

A conventional ether electrolyte containing an antioxidant additive was prepared as follows and tested with reference to Example 1.

0.935 g of lithium bis(fluorosulfonyl)imide salt was weighted and added into 5 ml of ethylene glycol dimethyl ether (DME) solvent, then 1% of lithium nitrate powder of the total mass was added and stirred thoroughly to form a colorless transparent electrolyte with 1M concentration containing anti-oxidation additive for oxidation stability test and long-cycle test of liquid lithium secondary battery.

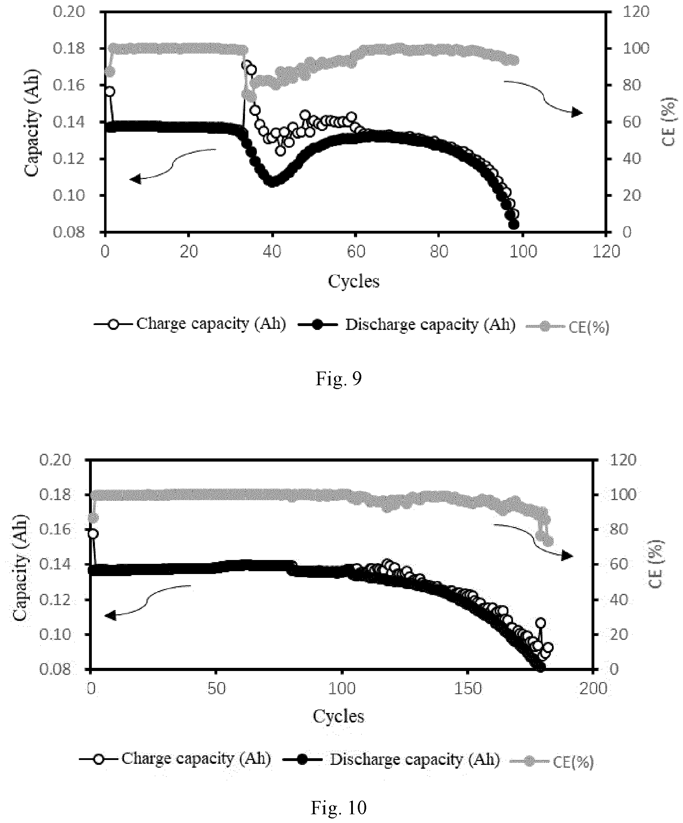

The electrolyte was tested to have an oxidation stability critical voltage of 5.1V. Referring to Fig. 9, in the liquid-state lithium secondary battery, an overcharge phenomenon occurred in the range of about 35 to 60 cycles during the cycling, and the discharge capacity was significantly affected in this range, with a cycle life of 92 cycles.

### Comparative example 6

A fluoroether-based electrolyte containing an antioxidant additive was prepared as follows and tested with reference to Example 1.

0.935 g of lithium bis(fluorosulfonyl)imide salt was weighted and added into 5 ml of solvent of Fomula I-2, then 1% of lithium nitrate powder of the total mass was added and stirred thoroughly to form a colorless transparent electrolyte with 1M concentration containing anti-oxidation additive for oxidation stability test and long-cycle test of liquid lithium secondary battery.

The oxidation stability of the electrolyte was tested to be 5.4V. Referring to Fig. 10, in the liquid lithium secondary battery, a slight overcharge phenomenon occurred in the range of 100 to 170 cycles during the cycling, but the discharge capacity in this range was less affected and recovered by itself, and the cycle life was 159 cycles.

Table 2 illustrates the electrolytes of Example 17 to Example 46 and Comparative Example 5 to Comparative Example 6 and their performance test data.

**[Table 2]**

| **Serial number** | **First solvent** | **Second solvent** | **Mass ratio of solvents** | **Concentration of electrolyte salt (M)** | **Antioxidant** | **Antioxidant content (wt. %)** | **Oxidation stability critical voltage (V)** | **Cycle life (cycles)** | **Overcharge occurred or not?** |
|---|---|---|---|---|---|---|---|---|---|
| Example 17 | I-2 | III-3 | 1 | 1 | Lithium nitrate | 1 | 5.5 | 177 | No |
| Example 18 | I-2 | III-3 | 0.5 | 1 | Lithium nitrate | 1 | 5.6 | 158 | No |
| Example 19 | I-2 | III-3 | 0.7 | 1 | Lithium nitrate | 1 | 5.6 | 162 | No |
| Example 20 | I-2 | III-3 | 0.9 | 1 | Lithium nitrate | 1 | 5.6 | 171 | No |
| Example 21 | I-2 | III-3 | 1.1 | 1 | Lithium nitrate | 1 | 5.6 | 173 | No |
| Example 22 | I-2 | III-3 | 1.5 | 1 | Lithium nitrate | 1 | 5.5 | 164 | No |
| Example 23 | I-2 | III-3 | 3 | 1 | Lithium nitrate | 1 | 5.5 | 158 | No |
| Example 24 | I-2 | III-3 | 0.3 | 1 | Lithium nitrate | 1 | 5.7 | 151 | No |
| Example 25 | I-2 | III-3 | 4 | 1 | Lithium nitrate | 1 | 5.5 | 153 | No |
| Example 26 | I-65 | III-3 | 1 | 1 | Lithium nitrate | 1 | 5.5 | 174 | No |
| Example 27 | I-65 | III-3 | 0.5 | 1 | Lithium nitrate | 1 | 5.6 | 159 | No |
| Example 28 | I-65 | III-3 | 0.7 | 1 | Lithium nitrate | 1 | 5.6 | 164 | No |
| Example 29 | I-65 | III-3 | 0.9 | 1 | Lithium nitrate | 1 | 5.6 | 172 | No |
| Example 30 | I-65 | III-3 | 1.1 | 1 | Lithium nitrate | 1 | 5.5 | 171 | No |
| Example 31 | I-65 | III-3 | 1.5 | 1 | Lithium nitrate | 1 | 5.5 | 164 | No |
| Example 32 | I-65 | III-3 | 3 | 1 | Lithium nitrate | 1 | 5.5 | 160 | No |
| Example 33 | I-10 | II-7 | 1 | 1 | Lithium nitrate | 1 | 5.6 | 167 | No |
| Example 34 | I-10 | II-7 | 0.5 | 1 | Lithium nitrate | 1 | 5.7 | 152 | No |
| Example 35 | I-10 | II-7 | 0.7 | 1 | Lithium nitrate | 1 | 5.7 | 158 | No |
| Example 36 | I-10 | II-7 | 0.9 | 1 | Lithium nitrate | 1 | 5.7 | 163 | No |
| Example 37 | I-10 | II-7 | 1.1 | 1 | Lithium nitrate | 1 | 5.6 | 164 | No |
| Example 38 | I-10 | II-7 | 1.5 | 1 | Lithium nitrate | 1 | 5.6 | 157 | No |
| Example 39 | I-10 | II-7 | 3 | 1 | Lithium nitrate | 1 | 5.5 | 149 | No |
| Example 40 | I-2 | III-3 | 0.5 | 1 | Lithium perchlorate | 1 | 5.6 | 153 | No |
| Example 41 | I-2 | III-3 | 0.7 | 1 | Lithium perchlorate | 1 | 5.6 | 160 | No |
| Example 42 | I-2 | III-3 | 0.9 | 1 | Lithium perchlorate | 1 | 5.6 | 172 | No |
| Example 43 | I-2 | III-3 | 1 | 1 | Lithium perchlorate | 1 | 5.5 | 176 | No |
| Example 44 | I-2 | III-3 | 1.1 | 1 | Lithium perchlorate | 1 | 5.6 | 173 | No |
| Example 45 | I-2 | III-3 | 1.5 | 1 | Lithium perchlorate | 1 | 5.5 | 162 | No |
| Example 46 | I-2 | III-3 | 3 | 1 | Lithium perchlorate | 1 | 5.5 | 154 | No |
| Comparative example 5 | DME | - | - | 1 | Lithium nitrate | 1 | 5.1 | 92 | Yes |
| Comparative example 6 | I-2 | - | - | 1 | Lithium nitrate | 1 | 5.5 | 147 | Yes |

As revealed in Table 2, the electrolyte added with the antioxidant improves the oxidation stability of the electrolyte and increases the cycle life, while no overcharging occurs. As can be seen from Comparative Example 3 to Comparative Example 4, the effect of avoiding overcharge cannot be achieved by using a combination of the conventional ether-based solvent and the antioxidant; and the effect of avoiding overcharge cannot be achieved by using a combination of the fluorine-containing ether-based solvent and the antioxidant, although the resistance to oxidation can be improved and cycle life can be prolonged.

### Example 47 to Example 52

Example 47 to Example 52 differ from Example 17 in the concentration of the added antioxidant.

### Example 53 to Example 64

Example 53 to Example 58 differ from Example 26 in concentration of the antioxidant. Example 59 to Example 64 differ from Example 33 in the concentration of the antioxidant.

### Example 65 to Example 70

Example 65 to Example 70 differ from Example 17 in the added antioxidant and the concentration thereof.

### Example 71 to Example 78

Example 71 to Example 72 differ from Example 17 in the concentration of electrolyte salt. Example 73 to Example 74 differ from Example 26 in the concentration of electrolyte salt. Example 75 to Example 76 differ from Example 33 in the concentration of electrolyte salt. Example 77 to Example 78 differ from Example 71 to Example 72 in the antioxidant.

Table 3 below illustrates the electrolytes of Example 47 to Example 78 and their performance test results.

**[Table 3]**

| **Serial number** | **First solvent** | **Second solvent** | **Mass ratio of solvents** | **Concentration of electrolyte salt (M)** | **Antioxidant** | **Antioxidant content (wt.%)** | **Oxidation stability critical voltage (V)** | **Cycle life (cycles)** | **Overcharge occurred or not?** |
|---|---|---|---|---|---|---|---|---|---|
| Example 47 | I-2 | III-3 | 1 | 1 | Lithium nitrate | 0.5 | 5.5 | 173 | No |
| Example 48 | I-2 | III-3 | 1 | 1 | Lithium nitrate | 0.7 | 5.5 | 174 | No |
| Example 49 | I-2 | III-3 | 1 | 1 | Lithium nitrate | 0.9 | 5.5 | 176 | No |
| Example 50 | I-2 | III-3 | 1 | 1 | Lithium nitrate | 1.1 | 5.5 | 176 | No |
| Example 51 | I-2 | III-3 | 1 | 1 | Lithium nitrate | 1.5 | 5.6 | 175 | No |
| Example 52 | I-2 | III-3 | 1 | 1 | Lithium nitrate | 3 | 5.6 | 172 | No |
| Example 53 | I-65 | III-3 | 1 | 1 | Lithium nitrate | 0.5 | 5.5 | 169 | No |
| Example 54 | I-65 | III-3 | 1 | 1 | Lithium nitrate | 0.7 | 5.5 | 171 | No |
| Example 55 | I-65 | III-3 | 1 | 1 | Lithium nitrate | 0.9 | 5.5 | 173 | No |
| Example 56 | I-65 | III-3 | 1 | 1 | Lithium nitrate | 1.1 | 5.5 | 172 | No |
| Example 57 | I-65 | III-3 | 1 | 1 | Lithium nitrate | 1.5 | 5.5 | 170 | No |
| Example 58 | I-65 | III-3 | 1 | 1 | Lithium nitrate | 3 | 5.5 | 168 | No |
| Example 59 | I-10 | II-7 | 1 | 1 | Lithium nitrate | 0.5 | 5.5 | 162 | No |
| Example 60 | I-10 | II-7 | 1 | 1 | Lithium nitrate | 0.7 | 5.5 | 164 | No |
| Example 61 | I-10 | II-7 | 1 | 1 | Lithium nitrate | 0.9 | 5.5 | 166 | No |
| Example 62 | I-10 | II-7 | 1 | 1 | Lithium nitrate | 1.1 | 5.5 | 166 | No |
| Example 63 | I-10 | II-7 | 1 | 1 | Lithium nitrate | 1.5 | 5.5 | 163 | No |
| Example 64 | I-10 | II-7 | 1 | 1 | Lithium nitrate | 3 | 5.5 | 161 | No |
| Example 65 | I-2 | III-3 | 1 | 1 | Lithium perchlorate | 0.5 | 5.5 | 172 | No |
| Example 66 | I-2 | III-3 | 1 | 1 | Lithium perchlorate | 0.7 | 5.5 | 173 | No |
| Example 67 | I-2 | III-3 | 1 | 1 | Lithium perchlorate | 0.9 | 5.5 | 174 | No |
| Example 68 | I-2 | III-3 | 1 | 1 | Lithium perchlorate | 1.1 | 5.5 | 175 | No |
| Example 69 | I-2 | III-3 | 1 | 1 | Lithium perchlorate | 1.5 | 5.5 | 173 | No |
| Example 70 | I-2 | III-3 | 1 | 1 | Lithium perchlorate | 3 | 5.5 | 171 | No |
| Example 71 | I-2 | III-3 | 1 | 0.5 | Lithium nitrate | 1 | 5.4 | 165 | No |
| Example 72 | I-2 | III-3 | 1 | 3 | Lithium nitrate | 1 | 5.6 | 168 | No |
| Example 73 | I-10 | II-7 | 1 | 0.5 | Lithium nitrate | 1 | 5.5 | 151 | No |
| Example 74 | I-10 | II-7 | 1 | 3 | Lithium nitrate | 1 | 5.7 | 159 | No |
| Example 75 | I-65 | III-3 | 1 | 0.5 | Lithium nitrate | 1 | 5.4 | 163 | No |
| Example 76 | I-65 | III-3 | 1 | 3 | Lithium nitrate | 1 | 5.6 | 157 | No |
| Example 77 | I-2 | III-3 | 1 | 0.5 | Lithium perchlorate | 1 | 5.4 | 163 | No |
| Example 78 | I-2 | III-3 | 1 | 3 | Lithium perchlorate | 1 | 5.6 | 166 | No |

As can be seen from Table 3, the use of an antioxidant in the mentioned concentration ranges can further improve the oxidation stability and prolong the cycle life.

As can be seen from the above, the performances are optimal when the mass ratio of the first solvent to the second solvent is 1, the concentration of the antioxidant additive is 1%, and the concentration of the electrolyte salt is 1M.

It should be noted that the present disclosure is not limited to the above-mentioned embodiments. The above-mentioned embodiments are merely examples. Within the scope of the technical solutions of the present disclosure, embodiments having substantially the same constitution as the technical concept and exerting the same function and effect are all included within the technical scope of the present disclosure. In addition, various modifications can be made to the embodiments by those skilled in the art without departing from the spirit of the present disclosure, and other embodiments that are constructed by combining some of the constituent elements of the embodiments are also included in the scope of the present disclosure.

## Claims

1. An electrolyte, comprising:
a first solvent as represented by Formula I: 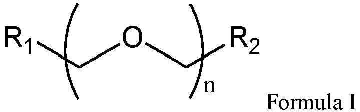 wherein:
R₁ is selected from C1-C6 fluoroalkyl;
R₂ is selected from a hydrogen atom, C1-C6 alkyl, and C1-C6 fluoroalkyl; and
n represents 1 or 2, and
a second solvent selected from one or more of compounds represented by Formula II and Formula III: 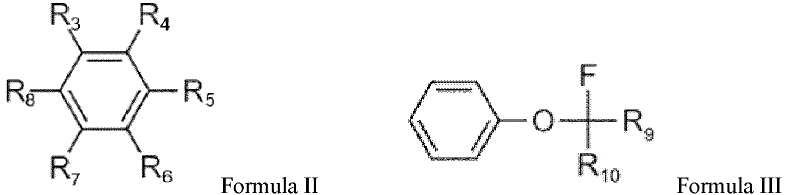 wherein R₃ to R₁₀ are each independently selected from a hydrogen atom, a fluorine atom, C1-C6 alkyl, and C1-C6 fluoroalkyl.

2. The electrolyte according to claim 1, wherein in the Formula I:
R₁ is selected from C1-C3 fluoroalkyl, and optionally, R₁ is fluoromethyl; and/or
R₂ is selected from a hydrogen atom, C1-C3 alkyl, and C1-C3 fluoroalkyl, and optionally, selected from a hydrogen atom, methyl, fluoromethyl, ethyl, and fluoroethyl.

3. The electrolyte according to claim 1 or 2, wherein:
in the Formula II, R₃ to R₈ are each independently selected from a hydrogen atom, a fluorine atom, and C1-C6 fluoroalkyl, and optionally, selected from a hydrogen atom, a fluorine atom, and C1-C3 fluoroalkyl; and/or
in the Formula III, R₉ to Rio are each independently selected from a hydrogen atom, a fluorine atom, and C1-C6 alkyl, optionally, selected from a hydrogen atom, a fluorine atom, C1-C3 alkyl, and C1-C3 fluoroalkyl, and more optionally, R₉ to Rio are each independently selected from a hydrogen atom or a fluorine atom.

4. The electrolyte according to any one of claims 1 to 3, wherein a mass ratio of the first solvent to the second solvent ranges from 0.5 to 3, optionally, from 0.7 to 1.5, and more optionally, from 0.9 to 1.1.

5. The electrolyte according to any one of claims 1 to 4, further comprising an antioxidant, optionally, the antioxidant being selected from at least one of lithium nitrate and lithium perchlorate.

6. The electrolyte according to claim 5, wherein a concentration of the antioxidant ranges from 0.5 wt% to 3 wt%, optionally, from 0.7 wt% to 1.5 wt%, and more optionally, from 0.9 wt% to 1.1 wt%, based on a total weight of the electrolyte.

7. The electrolyte according to any one of claims 1 to 6, further comprising a fluorine-containing electrolyte salt, optionally, the fluorine-containing electrolyte salt being selected from at least one of lithium bis(fluorosulfonyl)imide, lithium hexafluorophosphate, lithium tetrafluoroborate, lithium hexafluoroarsenate, lithium bis(trifluoromethanesulfonylimide), lithium trifluoromethanesulfonate, lithium difluorophosphate, lithium difluoro(oxalato)borate, lithium difluorobis(oxalato)phosphate, and lithium tetrafluoro(oxalato)phosphate, and more optionally, the fluorine-containing electrolyte salt being lithium bis(fluorosulfonyl)imide.

8. The electrolyte according to claim 7, wherein a concentration of the fluorine-containing electrolyte salt ranges from 0.5M to 3M, and optionally, the concentration of the fluorine-containing electrolyte salt is 1M.

9. A secondary battery, comprising the electrolyte according to any one of claims 1 to 8.

10. A battery module, comprising the secondary battery according to claim 9.

11. A battery pack, comprising the battery module according to claim 10.

12. An electrical device, comprising at least one selected from the secondary battery according to claim 9, the battery module according to claim 10, or the battery pack according to claim 11.
